# EUROPEAN PATENT SPECIFICATION

(11) **EP 1 962 535 B1**
(45) Date of publication and mention of the grant of the patent: **21.11.2018**
(21) Application number: 08002268.4
(22) Date of filing: 07.02.2008
(51) Int. Cl.: H04J 11/00

(54) **Cumulative neighboring cell list**
Gesamtliste benachbarter Zellen
Liste de cellules voisines cumulatives

(30) Priority: 07.02.2007 US 888742 P
(43) Date of publication of application: 27.08.2008
(73) Proprietor: LG Electronics Inc., Yeongdeungpo-gu Seoul 150-721 (KR)
(72) Inventor: Fischer, Patrick, 95970 Roissy CDG Cedex (FR)
(74) Representative: Katérle, Axel

(56) References cited:
- FR-A- 2 866 185
- US-A- 5 946 621
- US-A1- 2004 121 773
- US-B1- 6 201 968

## Description

### FIELD OF THE INVENTION

The present invention relates to reducing overhead due to broadcasting of neighboring cells when different frequencies and technologies must be listed as neighboring cells and, particularly, to reducing the number of cells that must be broadcast and the number of cells that a mobile terminal must measure.

### DESCRIPTION OF THE RELATED ART

A universal mobile telecommunication system (UMTS) is a European-type, third generation IMT-2000 mobile communication system that has evolved from a European standard known as Global System for Mobile communications (GSM). UMTS is intended to provide an improved mobile communication service based upon a GSM core network and wideband code division multiple access (W-CDMA) wireless connection technology. In December 1998, a Third Generation Partnership Project (3GPP) was formed by the ETSI of Europe, the ARIB/TTC of Japan, the T1 of the United States, and the TTA of Korea. The 3GPP creates detailed specifications of UMTS technology.

In order to achieve rapid and efficient technical development of the UMTS, five technical specification groups (TSG) have been created within the 3GPP for standardizing the UMTS by considering the independent nature of the network elements and their operations. Each TSG develops, approves, and manages the standard specification within a related region. The radio access network (RAN) group (TSG-RAN) develops the standards for the functions, requirements, and interface of the UMTS terrestrial radio access network (UTRAN), which is a new radio access network for supporting W-CDMA access technology in the UMTS.

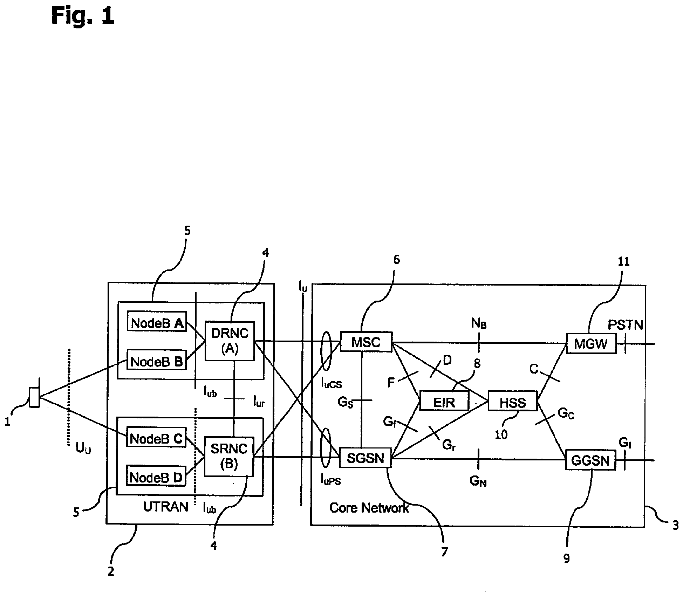

FIG. 1 provides an overview of a UMTS network. The UMTS network includes a mobile terminal or user equipment (UE) 1, a UTRAN 2 and a core network (CN) 3.

The UTRAN 2 includes several radio network controllers (RNCs) 4 and NodeBs 5 that are connected via the Iub interface. Each RNC 4 controls several NodeBs 5. Each NodeB 5 controls one or several cells, where a cell covers a given geographical area on a given frequency.

Each RNC 4 is connected via the lu interface to the CN 3 or towards the mobile switching center (MSC) 6 entity of the CN and the general packet radio service (GPRS) support Node (SGSN) 7 entity. RNCs 4 can be connected to other RNCs via the Iur interface. The RNC 4 handles the assignment and management of radio resources and operates as an access point with respect to the CN 3.

The NodeBs 5 receive information sent by the physical layer of the UE 1 via an uplink and transmit data to the UE 1 via a downlink. The Node-Bs 5 operate as access points of the UTRAN 2 for the UE 1.

The SGSN 7 is connected to the equipment identity register (EIR) 8 via the Gf interface, to the MSC 6 via the GS interface, to the gateway GPRS support node (GGSN) 9 via the GN interface, and to the home subscriber server (HSS) via the GR interface.

The EIR 8 hosts lists of UEs 1 that are allowed to be used on the network. The EIR 8 also hosts lists of UEs 1 that are not allowed to be used on the network.

The MSC 6, which controls the connection for circuit switched (CS) services, is connected towards the media gateway (MGW) 11 via the NB interface, towards the EIR 8 via the F interface, and towards the HSS 10 via the D interface.

The MGW 11 is connected towards the HSS 10 via the C interface and also to the public switched telephone network (PSTN). The MGW 11 also allows the codecs to adapt between the PSTN and the connected RAN.

The GGSN 9 is connected to the HSS 10 via the GC interface and to the Internet via the GI interface. The GGSN 9 is responsible for routing, charging and separation of data flows into different radio access bearers (RABs). The HSS 10 handles the subscription data of users.

The UTRAN 2 constructs and maintains an RAB for communication between a UE 1 and the CN 3. The CN 3 requests end-to-end quality of service (QoS) requirements from the RAB and the RAB supports the QoS requirements set by the CN 3. Accordingly, the UTRAN 2 can satisfy the end-to-end QoS requirements by constructing and maintaining the RAB.

The services provided to a specific UE 1 are roughly divided into CS services and packet switched (PS) services. For example, a general voice conversation service is a CS service and a Web browsing service via an Internet connection is classified as a PS service.

The RNCs 4 are connected to the MSC 6 of the CN 3 and the MSC is connected to the gateway MSC (GMSC) that manages the connection with other networks in order to support CS services. The RNCs 4 are connected to the SGSN 7 and the gateway GGSN 9 of the CN 3 to support PS services.

The SGSN 7 supports packet communications with the RNCs. The GGSN 9 manages the connection with other packet switched networks, such as the Internet.

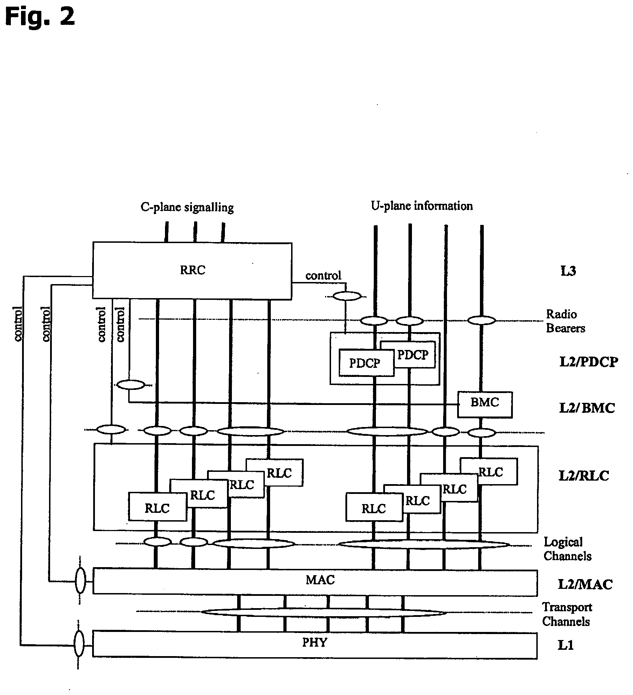

FIG 2 illustrates a structure of a radio interface protocol between a UE 1 and the UTRAN 2 according to the 3GPP radio access network standards. As illustrated In FIG. 2, the radio interface protocol has horizontal layers comprising a physical layer, a data link layer, and a network layer, and has vertical planes comprising a user plane (U-plane) for transmitting user data and a control plane (C-plane) for transmitting control information. The U-plane is a region that handles traffic information with the user, such as voice or Internet protocol (IP) packets. The C-plane is a region that handles control information for an interface with a network as well as maintenance and management of a call. The protocol layers can be divided into a first layer (L1), a second layer (L2), and a third layer (L3) based on the three lower layers of an open system interconnection (OSI) standard model.

The first layer (L1), or physical layer, provides an information transfer service to an upper layer by using various radio transmission techniques. The physical layer is connected to an upper layer, or medium access control (MAC) layer, via a transport channel. The MAC layer and the physical layer exchange data via the transport channel.

The second layer (L2) includes a MAC layer, a radio link control (RLC) layer, a broadcast/multicast control (BMC) layer, and a packet data convergence protocol (PDCP) layer. The MAC layer handles mapping between logical channels and transport channels and provides allocation of the MAC parameters for allocation and re-allocation of radio resources. The MAC layer is connected to an upper layer, or the radio link control (RLC) layer, via a logical channel.

Various logical channels are provided according to the type of information transmitted. A control channel is generally used to transmit information of the C-plane and a traffic channel is used to transmit information of the U-plane. A logical channel may be a common channel or a dedicated channel depending on whether the logical channel is shared.

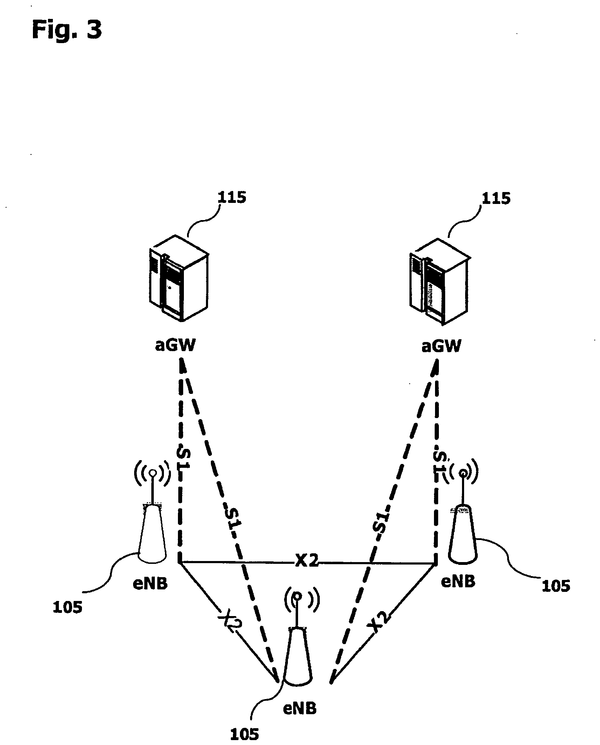

FIG 3 illustrates the architecture of an LTE system. Each aGW 115 is connected to one or several access Gateways (aGW) 115. An aGW 115 is connected to another Node (not shown) that allows access to the Internet and / or other networks, such as GSM, UMTS, and WLAN.

The 3G LTE requires reduced cost per bit, increased service availability, flexible use of a frequency band, a simple structure, an open interface, and adequate power consumption of a terminal as an upper-level requirement. Generally, The UTRAN 2 corresponds to E-UTRAN (Evolved-UTRAN). The NodeB 5 and / or RNC 4 correspond to e-NodeB (eNB) in the LTE system.

In conventional methods, a UE 1 must select a first cell of the radio access technology and check the suitability based on different criteria. The UE 1 then registers to the network and maintains a connection to the network by receiving system information and listening to paging messages, for example when the UE is camping on a cell from the network.

The UE 1 reads system information from the selected cell in order to be informed of information related to the neighboring cells of the network and maintain the connection to the network. The neighboring cells include cells from the same technology on the same frequency, cells from the same technology on different frequencies and cells from different technologies on different frequencies.

The UE 1 will periodically perform measurements on this neighboring cell list in order to reselect to better cells based on radio criteria. If the reception quality of the cell that the UE 1 is camping on degrades below a certain level the cell is no longer suitable the UE is then allowed to take into account cells that are not included in the neighboring cell list of the last cell on which the UE camped in order to find another suitable cell.

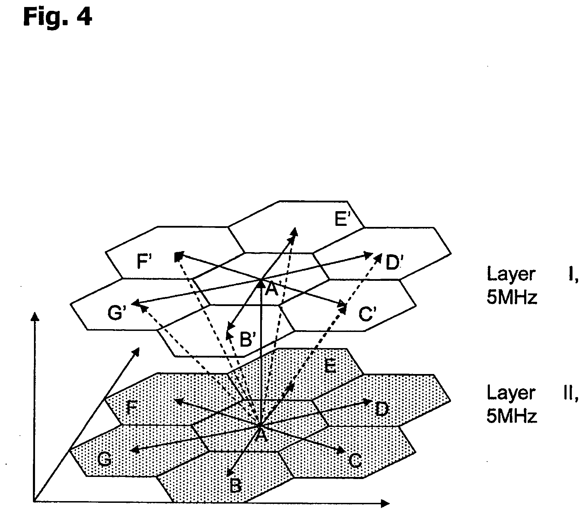

FIG. 4 illustrates an example where two frequencies are deployed. As illustrated in FIG. 4, the number of neighboring cells that must be broadcast in a given cell roughly doubles.

For example, cell 'A' would only need to broadcast the neighboring cells B, C, D, E, F and G if only the lower frequency, which corresponds to Layer II FIG 4, is deployed. However, cells A', B', C', D', E', F' and G' also would have to be broadcast in cell A if the upper frequency, which corresponds to Layer I FIG 4, is also deployed. The situation is similar if the UE 1 is able to use two different access technologies, such as UMTS and GSM or UMTS and LTE, although there are some additional impacts due to the coverage of the different technologies not necessarily being the same.

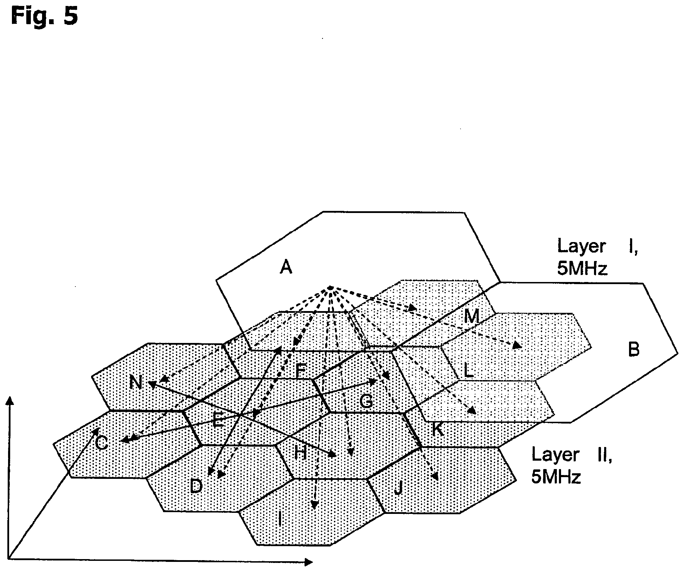

FIG. 5 illustrates an example of a hierarchical cell structure. As illustrated in FIG. 5, cells with different sizes are deployed in different frequencies, with cell A and B of Layer I referred to as macro cells and the remaining cells shown from C to N referred to as micro cells with respect to the underlying Layer II.

The capacity of the Layer II micro cells, or the data rate per square km, is much higher because the capacity per cell for macro and micro cells is roughly the same and the number of micro cells in a given area is much higher than the number of macro cells. However, UEs 1 that are moving quickly will need to reselect cells very frequently due to the much smaller cell size.

In the example Illustrated in FIG. 5, macro layer Layer I must broadcast all cells from the micro layer Layer II, such that cell A would need to broadcast all the micro cells that are in the coverage area of the macro cell in addition to the neighbors of the same layer. Therefore, the burden on the system information volume is very high for the macro cells because there are many more micro cells in the coverage area of a macro cell. Furthermore, a UE 1 in a macro cell must measure on many more frequencies than a UE in a micro cell.

The overhead due to broadcasting of the neighboring cells becomes excessive if there are many different frequencies and technologies that must be listed as neighboring cells. Furthermore, the impact on the UE 1 consumption when the UE must measure on many cells simultaneously becomes very high.

US 6,201,968 B1 relates to handover in a mobile communications network. A subscriber unit traversing a path downloads a neighbor cell list from a first cell site and stores a corresponding list in the memory. If at a given location the subscriber unit is no longer able to satisfactorily communicate with the first cell site, the subscriber unit selects a second cell side at a suitable server using its current neighbor cell list. The subscriber unit obtains then, by way of download, the neighbor cell list downloadable from the second cell site. If the second cell site has a classification indicating a wide area coverage, when compared to other cell sites, the subscriber unit combines entries from the neighbor cell list downloaded with entries from the current or previously obtained neighbor cell list to obtain an updated or supplemented neighbor cell list.

FR 2 866 185 discloses that a neighbor cell list exists for each cell in a mobile communications system in order to permit handover to neighbor cells. Such cell list is generally constituted manually by simulation or by statistical observations. The size of such list of neighboring cells is limited depending on the mobile communication system. As an example a maximum of 32 neighboring cells may be declared in such list in an UMTS system. If a radio terminal communicates actively with three server cells each having 32 neighbor cells, the composite list might accordingly comprise a selection of more than 32 cells up to a theoretic maximum of 96 neighbor cells associated to the common active cells, corresponding to a case where the neighboring cell list are separated. Such selection is preferably realized in a manner that the neighboring cells intended to be included in the composed list are best suited for continuing the communication of a modification of the active mobile terminal. It is proposed to reduce the size of the list. Thereby at least neighboring cells of the list associated respectively to each serving cell and to each neighboring cell of the list associated to one serving cell are classified as certain by an enumeration criteria. Further, the N first neighboring cells are selected at most from the classified neighboring cells, wherein this selection constitutes a reduced list with at most N neighboring cells of the serving cell. Such enumeration criteria can be based on the number of occurrences of each neighbor cell in the list of neighboring cells associated respectively to each serving cell and to each neighbour cell or the list associated to one serving cell or on the number of intersections of the cell lists.

US 2004/0121773 A1 discloses a mobile telecommunication system wherein a neighbor list in a mobile terminal includes a plurality of base stations. The neighbor list can only be populated depending on hand-off that are actually being used in the cellular telephone system. Call data can be parsed once a week or once several weeks in order to maintain the neigbor list.

### Summary of the invention

The invention provides a method according to claim 1 and a mobile terminal according to claim 9. Further embodiments of the invention are specified in the appended dependent claims.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
FIG. 1 illustrates an overview of a UMTS network.
FIG. 2 illustrates a structure of a radio interface protocol between a UE and the UTRAN according to the 3GPP radio access network standards.
FIG. 3 illustrates the architecture of an LTE system.
FIG 4 illustrates an example of two frequency layers with collocated cells.
FIG 5 illustrates an example of a hierarchical cell structure.
FIG 6 illustrates merging of intra-frequency neighboring cell lists.
FIG. 7 illustrates merging of inter-frequency neighboring cell lists.
FIG. 8 illustrates a block diagram of a mobile station (MS) or user equipment (UE) according to the present invention.

### DETAILED DESCRIPTION OF THE PREFERRED EMBODIMENTS

Reference will now be made in detail to the preferred embodiments of the present invention, examples of which are illustrated in the accompanying drawings. Several possibilities exist for reducing the size of a neighboring cell list.

One possibility for reducing the size of a neighboring cell list is to combine different cell information lists. A UE 1 may combine information from different cells if the UE is able to simultaneously receive system information from the different cells. This can reduce the number of neighboring cells that must be broadcast on one cell.

Normally, it is possible for a UE 1 to receive system information of the best neighboring cell when the UE is in between two different cells. Therefore, the UE 1 may combine the cell information lists of a neighboring cell with the cell list that the UE has read on the cell on which it is camping.

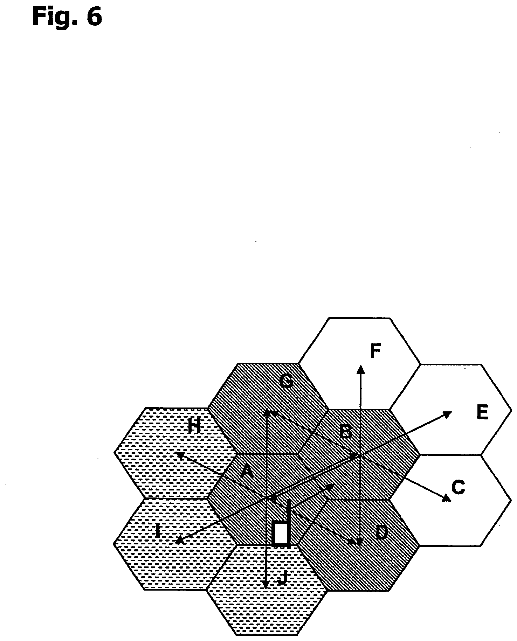

FIG 6 illustrates an example of merging intra-frequency neighboring cell lists. As illustrated in FIG 6, a UE 1 is camping on cell A having the neighboring cell lists B, G, H, I, J, D. The UE 1 would include the neighboring cell list broadcast on cell B as the UE moves toward cell B. Specifically, the UE 1 would include cells F, E and C and ignore cells A, B, D and G since these cells would already be present in the neighboring cell list of cell A on which the UE is camping.

The combining of cells could depend on a specific condition, such as when the neighboring cell from which the UE 1 reads the cell information list is suitable. Conditions for the selection of the neighboring cell from which the UE 1 should read the system information could be specified.

For example, a condition may be that the UE 1 should only combine the neighboring cell information lists from a fixed number of neighboring cells, such as the 'x' highest ranked cells. Specifically this could be done for neighboring cells that are listed in the current cell and for which it is indicated that the UE 1 is allowed to combine the neighboring cell information list.

This combining results in each cell having to broadcast less neighboring cells since the UE 1 will add additional neighboring cells from the direction in which the UE moves. Only the information contained in the system information of the cell on which the UE 1 is camping should be kept If there are cells listed several times.

Similarly, special handling may be required for specific offsets for cell C that is listed as a neighbor of cell B from which the UE 1 reads the system information in order to add the neighboring cell information list of cell B to the neighboring cell information list of cell A. For example, the UE 1 could add the difference of the transmission power between cells A and B to the offset indicated for cell C in the neighboring cell information list of cell B.

Combining may also be possible for inter-frequency cells when, for example, two 5 MHz cells are used instead of one 10 MHz cell. This would facilitate use of Hierarchical Cell Structure (HCS) and increase the overall capacity.

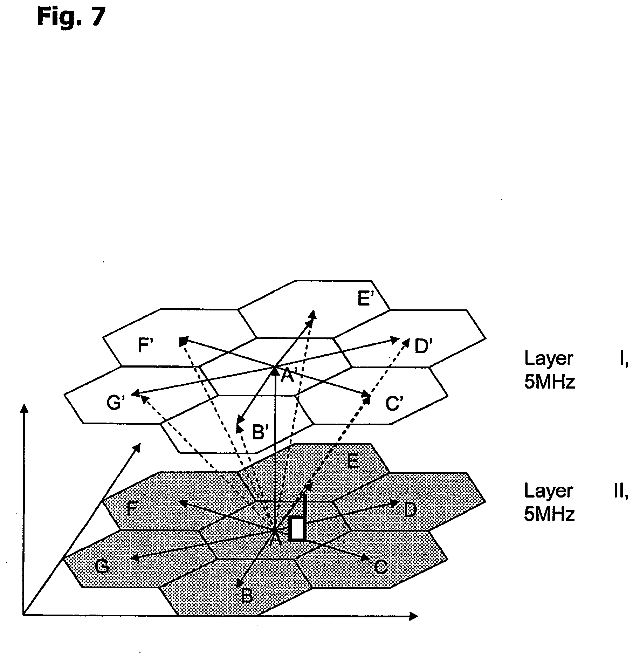

FIG. 7 illustrates an example of merging inter-frequency neighboring cell lists. As illustrated in FIG. 7, a UE 1 camping on cell A on frequency Layer II could combine the intra-frequency cell information list of cell A on which it is camping, which includes cells B, C, D, E, F and G, with the intra-frequency cell information list of cell A' on frequency Layer I, which includes cells B', C', D', E', F' and G'. This would allow the network to avoid having to send the inter-frequency neighboring cell lists.

Another possibility for reducing the size of a neighboring cell list is using blacklists. Cells that a UE 1 is not allowed to select would be listed in a blacklist. The blacklisted cells could include cells that are reserved for operator use, cells that are reserved for future extension or cells that cannot be reasonably considered as neighboring cells because a UE 1 cannot normally pass from one cell to another. Examples are cells that are separated by a river and micro cells that are in two different skyscrapers.

A problem exists when the blacklist becomes bigger than a corresponding white list. This approach is feasible for both intra-frequency and inter-frequency cells.

Another possibility for reducing the size of a neighboring cell list is indicating a source cell in the target cell. A UE 1 could check system information of the target cell to determine whether the cell on which it is currently camping is indicated as a neighboring cell of the target cell. The UE 1 would not be allowed to reselect if the source cell is not indicated as a neighboring cell. This approach is only feasible for intra-frequency cells.

Indicating a source cell in the target cell can reduce the list of neighboring cells in certain situations, specifically for large cells, since a large cell has more neighboring cells than a small cell and also allows the broadcasting of cell specific offsets. However, the UE 1 still might unnecessarily read the system information of the neighboring cell.

Another possibility for reducing the size of a neighboring cell list is a partial neighboring list. It is possible to indicate only neighboring cells in the cell list that need specific treatment. This approach is feasible for both intra-frequency and inter-frequency cells.

The present invention provides a method that reduces the overhead of the neighboring cells that must be signaled, which reduces the overhead in the system information, and also reduces the number of cells on which a UE 1 must perform measurements. It is important to reduce the number of neighboring cells broadcast in the system information, both for inter-frequency and inter-rat (Inter - Radio Access Technology).

The present invention proposes that a UE 1 might reselect between cells for which no detailed information on cells, such as frequency and type of Radio Access Technology (RAT) and cell specific information, such as a cell specific scrambling code or Bas Station identity Code (BSIC), is sent on the cell on which the UE 1 is currently camping. The methods of the present invention still facilitate efficient UE 1 measurement mechanisms.

It is assumed that a UE 1 in an LTE system is able to receive a minimum bandwidth of 10 MHz and the minimum bandwidth for a cell is 1.25 MHz. Eight cells of 1.25 MHz could be collocated on different frequencies in the worst case of a hierarchical cell structure, as illustrated in FIGS. 4 and 5. This would imply a huge number of neighboring cells. A UE 1 can read the system information of at least two cells simultaneously, such as from Layer I and Layer II in FIG. 4, instead of indicating all neighbors of one frequency.

LTE might be used particularly in a "hotspot" scenario, where LTE cells would be used as pico cells together with an overlay UMTS / GSM network. This would potentially require that many LTE cells be broadcast in the UMTS / GSM system information if all neighboring cells must be listed.

It is also possible that a UE 1 can read system information from different RATs and combine the cell information lists from system information for different cells if cells from different RATs, or cells from the same RAT on different frequencies, are co-located in the same area. This would depend on the receiver structure. However it is important that a UE 1 performs measurements only when it is necessary in order to reduce battery consumption.

Linking neighboring cells together, such as by indicating to a UE 1 that cells in the same area have similar coverage, would allow the UE to perform measurements only when there is a high likelihood of having good reception quality. This would reduce the number of neighboring cells on which the UE 1 should perform measurements, specifically the number of inter-frequency and inter-rat neighboring cells on which the UE should perform measurements.

For example, a UE 1 that has selected a first cell would start measurements on a third cell only if a second cell to which the third cell is linked has reached a predefined quality target. In the example illustrated in FIG. 4, the first cell could be cell A, the second cell could be cell B and the third cell could be cell B'.

Several detailed concepts are explained that allow a reduction in the number of neighboring cells that must be broadcast and the number of cells on which a UE 1 must perform measurements. Two scenarios are differentiated since they are very common and are most in need of enhancement.

The first scenario is a macro cell that covers the same area as many micro, or pico, cells. The potential number of neighboring cells that must be broadcast and that must be measured by a UE 1 would be very high.

The second scenario is collocated cells. The easiest way to increase capacity is to add other frequencies on the existing base stations, which doubles the number of neighboring cells that must be broadcast.

One possibility is to list the frequencies of the neighboring cells, such as the center frequency and bandwidth, for each type of radio access technology instead of indicating the neighboring cell list in a different layer. The UE 1 can then limit the search of neighboring cells on a given layer. The UE 1 would need to read the system information, or at least parts of the system information, of the cells in a different layer in order to determine whether the cells present can be selected once the UE has detected the presence of neighboring cells in the different layer.

It is also possible that the UE 1 would only read system information, or parts of it, in a different layer when the quality of the cell is above a certain limit that might be provided via dedicated signaling or on the system information on the cell on which the UE is currently camping. This would reduce the time spent performing quality measurements or receiving system information of the neighboring cells.

It is also possible to indicate to the UE 1, via the system information or via dedicated signaling in the cell on which the UE is currently camping, a list of cells that the UE should not select to, or a "black list." This would prevent the UE 1 from considering specific cells on a different layer in the vicinity of the current cell in the evaluation and prevent the UE 1 from reading system information unnecessarily.

Specifically, in a hierarchical cell structure, it is not necessary for a UE 1 camping on a macro cell to read the system information of smaller cells in a different layer immediately after entering a new macro cell since selecting to a smaller cell is only useful when the UE has a relatively low speed. Therefore, another enhancement when all neighboring cells in different layers are not broadcast could be that the UE 1 only reads system information on a given layer a specified time after entering the macro cell, such that the UE starts to receive system information or measure on a specific layer only after the specified time has elapsed after cell reselection in order to prevent unnecessary measurements and unnecessary reception of system information.

Another possibility is to send different pilots of cells in a given layer in a Single Frequency Network (SFN) operation where neighboring cells in the same frequency band send the same time-aligned information such that UEs 1 perceive the signal received from different antennas as having been sent from one antenna. This method can be used for efficient cell search in order to send a specific carrier for a given cell group.

This method can be used in such a configuration in order to allow measurement of reception quality of a given layer and thereby only the pilot sequences indicated on the cell on which the UE 1 is currently camping need be indicated instead of indicating the different cells. The UE 1 would start to determine specific cells using a pilot that is, for example, the strongest, and start to receive the system information of that cell only after the quality of the pilot sequence measured by the UE has exceeded a certain threshold.

It is possible to indicate in a different cell that is much better from a radio point of view, such as cell B, the list of cells from which the UE 1 is allowed to select to cell B in order to prevent the UE from selecting from a given cell, such as cell A, to the different cell unnecessarily, such as for Radio Resource Management (RRM) reasons. For example, if a UE 1 is allowed to select to cell B only from cell C, then only cell C would be indicated in the "allowed source cell list" sent on the system information of cell C and a UE from cell A would not select cell B after receiving system information from cell B. Another possibility would be to indicate cell A in a "forbidden source cell" list.

The intra-frequency neighboring cells that must be broadcast for each layer are normally similar for co-located cells, where the same locations are used for cells from several different RATs or frequencies, as illustrated in FIG 4. As illustrated in FIG. 4, the intra-frequency neighbors of cell A' in Layer I are cells B', C', D', E', F' and G' and the intra-frequency neighbors of cell A in Layer II are cells B, C, D, E, F and G.

Therefore, an efficient solution for reducing the numbers of neighboring cells that must be broadcast would be to create a rule that allows determination of a list of neighboring cells in a different layer from the list of neighboring cells of the cell on which the UE 1 is camping. In the example illustrated in FIG. 4, when a UE 1 camping on cell A' of Layer I receives the information on the neighboring cells B', C', D', E', F' and G', it is sufficient to add the information that the same neighbors are also available on Layer II and thereby the UE can assume that the neighboring cells in Layer II are cells A, B, C, D, E, F and G and that these cells are also included in the neighboring cell list.

For non-collocated cells, where cells on different layers are not co-located, it is also be possible to indicate one or several cells, such as cells A' and B', that are potentially in a different layer than a cell with similar coverage from the current cell that the UE 1 has selected, such as cell A, and indicate that the UE is also allowed to select to neighboring cells indicated as intra-frequency or inter-frequency cells in the system information of cell A' and B'. Other specific rules could also be defined, such as indicating in the neighboring cell list of cells, such as A' and B', which portion of the cell information list may be combined with a given cell on which the UE 1 is camping.

Generally, one possibility for reducing the number of cells on which a UE 1 performs measurements is to indicate for cells of different layers which intra-frequency cells have similar coverage, such as similar coverage collocated cells or cells that have larger or smaller coverage. The UE 1 would then only start to measure the cells of different layers after one or several of the cells with similar coverage has a certain quality.

Another possibility is to give a specific identification on the cell on which the UE is camping that is broadcast on the system information of the neighboring cells. The UE 1 can then identify that the cell belongs to a set of allowed cells using this identification.

The present invention may be used in order to reduce the number of cells that must be broadcast and the number of cells that a UE 1 must measure. The present invention is applicable to the LTE standards as well as to existing standards, such as GSM or UMTS.

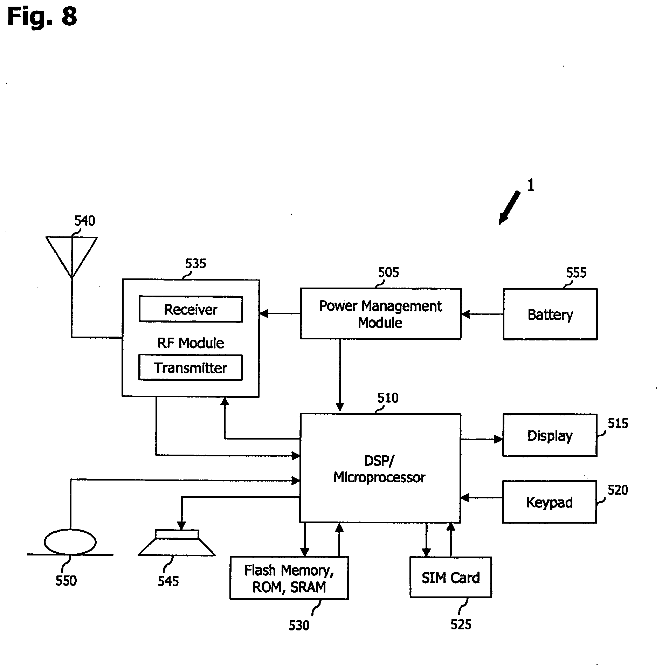

FIG 8 illustrates a block diagram of a mobile station (MS) or UE 1. The UE 1 includes a processor (or digital signal processor) 510, RF module 535, power management module 505, antenna 540, battery 555, display 515, keypad 520, memory 530, SIM card 525 (which may be optional), speaker 545 and microphone 550.

A user enters instructional information, such as a telephone number, for example, by pushing the buttons of a keypad 520 or by voice activation using the microphone 550. The microprocessor 510 receives and processes the instructional information to perform the appropriate function, such as to dial the telephone number. Operational data may be retrieved from the Subscriber identity Module (SIM) card 525 or the memory module 530 to perform the function. Furthermore, the processor 510 may display the instructional and operational information on the display 515 for the user's reference and convenience.

The processor 510 issues instructional information to the RF module 535, to initiate communication, for example, transmits radio signals comprising voice communication data. The RF module 535 comprises a receiver and a transmitter to receive and transmit radio signals. An antenna 540 facilitates the transmission and reception of radio signals. Upon receiving radio signals, the RF module 535 may forward and convert the signals to baseband frequency for processing by the processor 510. The processed signals would be transformed into audible or readable information outputted via the speaker 545, for example. The processor 510 also includes the protocols and functions necessary to perform the various processes described herein.

The foregoing embodiments and advantages are merely exemplary and are not to be construed as limiting the present invention. The present teaching can be readily applied to other types of apparatuses.

## Claims

1. A method for providing communication services to a mobile terminal (1) in a network including a plurality of network nodes (5) and one or several cells defined in a first frequency band and a second frequency band, each network node (5) controlling the one or several cells (A, A', B, B', C, C', D, D', E, E', F, F'), wherein each cell covers a given geographical area on a given frequency band chosen among the first and second frequency bands, the method comprising:
receiving first system information from a first network node (5) in a first cell currently selected by the mobile terminal (1), the first system information comprising a first list of cells that the mobile terminal (1) is allowed to select from the currently selected cell, wherein the cells of the first list are available for selection in a first frequency band;
receiving second and third system information from at least one further network node (5) that the mobile terminal (1) approaches, the second system information comprising a second list of candidate neighbor cells available for selection by the mobile terminal (1) in the first frequency band and the third system information comprising a third list of information about the frequencies of candidate neighbor cells in the second frequency band; and
adjusting the first list by combining the first list with the second list and information in the third list.

2. The method of claim 1, wherein:
- combining the first list with the second list and third list comprises adding to the first list, only those candidate neighbor cells indicated in the second and/or third list that are not already indicated in the first list; and/or
- combining the first list with the second and third list comprises adding to the first list, candidate neighbor cells indicated in the second and/or third list only if a second network node of the at least one further network node is indicated in the first list.

3. The method according to claim 1 or 2, wherein the candidate neighbor cells in the first frequency band and the candidate neighbor cells in the second frequency band employ different radio access technologies and the adjusting step combines candidate neighbor cell information of candidate neighbor cells using different radio access technologies.

4. The method according to any one of claims 1 to 3, wherein the candidate neighbor cells (A, B) available for selection in the first frequency band and the candidate neighbor cells (C-N) available for selection in the second frequency band have different size.

5. The method according to claim 4, wherein, if the mobile terminal (1) enters from a macro cell assigned to the first network node into a macro cell assigned to the further network node, the step of receiving the second or third system information relating to the smaller cell by the mobile terminal (1) is delayed.

6. The method according to any one of claims 1 to 5, wherein the third information includes a rule allowing the determination of a list of candidate neighbor cells available for selection in the second frequency band, when the mobile terminal (1) is operating in the first frequency band.

7. The method according to claim 6, wherein
the third system information includes information that the same cells as defined by the candidate neighbor cells in the second system information are available in a different frequency band or
the third system information includes information which of the candidate neighbor cells (C-N) available for selection in the second frequency band have the same or a different coverage than the candidate neighbor cells available for selection in the first frequency band.

8. A computer-readable medium (530) comprising code portions which, when executed on a processor (510), configure the processor to perform all steps of a method according to any one of the preceding method claims.

9. A mobile terminal (1) for communication services in a network including a plurality of network nodes (5) and one or several cells defined in a first frequency band (I) and a second frequency band (II), each network node (5) controlling the one or several cells (A, A', B, B', C, C', D, D', E, E', F, F'), wherein each cell covers a given geographical area on a given frequency band chosen among the first and second frequency bands, the mobile terminal (1) comprising:
a receiving unit (535) adapted to:
- receive first system information from a first network node in a first cell currently selected by the mobile terminal (1), wherein the first system information comprises a first list of candidate cells in a first frequency band that the mobile terminal (1) is allowed to select from the currently selected cell, and
- receive second and third system information from at least one further network node that the mobile terminal (1) approaches, wherein the second system information comprises a second list of candidate neighbor cells available for selection by the mobile terminal (1) in the first frequency band and the third system information comprises a third list of or information about the frequency bands of candidate neighbor cells in the second frequency band; and
a processing unit (510) adapted to adjust the first list by combining the first list with the second list and information in the third list.

10. The mobile terminal according to claim 9, wherein the processing unit (510) is adapted to combine the first list with the second list and third list by adding to the first list, only those candidate neighbor cells indicated in the second and/or third list that are not already indicated in the first list.

11. The mobile terminal according to claim 9 or 10, wherein the processing unit (510) is adapted to combine the first list with the second and third list by adding to the first list, candidate neighbor cells indicated in the second and/or third list only if a second network node of the at least one further network node is indicated in the first list.

12. The mobile terminal according to any one of claims 9 to 11, wherein the candidate neighbor cells available for selection in the first frequency band and the candidate neighbor cells available for selection in the second frequency band employ different radio access technologies and the processing unit is adapted to combine candidate neighbor cell information of cells using different radio access technologies.

13. The mobile terminal according to any one of claims 9 to 12, wherein the cells (A, B) available for selection in the first frequency band and the cells (C-N) available for selection in the second frequency band have different size.

14. The mobile terminal according to claim 13, wherein, if the mobile terminal (1) enters from a macro cell assigned to the first network node into a macro cell assigned to a further network node, the mobile terminal (1) is adapted to delay receiving the second or third system information relating to the smaller cell.

15. The mobile terminal according to any one of claims 9 to 14, wherein the third information includes a rule allowing the determination of a list of candidate neighbor cells available for selection in the second frequency band, when the mobile terminal (1) is operating in the first frequency band.

16. The mobile terminal according to claim 15, wherein
the third system information includes information that the same cells as defined by the candidate neighbor cells in the second system information are available in a different frequency band or
the third system information includes information which of the candidate neighbor cells (C-N) available for selection in the second frequency band have the same or a different coverage than the candidate neighbor cells available for selection in the first frequency band.

## Patentansprüche

1. Verfahren zum Bereitstellen von Kommunikationsdiensten für ein mobiles Endgerät (1) in einem Netzwerk, das eine Vielzahl von Netzwerkknoten (5) und eine oder mehrere Zellen umfasst, die in einem ersten Frequenzband und einem zweiten Frequenzband definiert ist oder sind, wobei jeder Netzwerkknoten (5) die eine oder mehreren Zellen (A, A', B, B', C, C', D, D', E, E', F, F') steuert, wobei jede Zelle einen gegebenen geographischen Bereich auf einem gegebenen Frequenzband abdeckt, das unter den ersten und zweiten Frequenzbändern ausgewählt ist, wobei das Verfahren umfasst:
Empfangen von ersten Systeminformationen von einem ersten Netzwerkknoten (5) in einer erste Zelle, die momentan durch das mobile Endgerät (1) ausgewählt ist, wobei die ersten Systeminformationen eine erste Liste von Zellen umfassen, die das mobile Endgerät (1) aus der momentan ausgewählten Zelle auswählen darf, wobei die Zellen der ersten Liste zur Auswahl in einem ersten Frequenzband zur Verfügung stehen;
Empfangen von zweiten und dritten Systeminformationen von zumindest einem weiteren Netzwerkknoten (5), dem sich das mobile Endgerät (1) nähert, wobei die zweiten Systeminformationen eine zweite Liste von Kandidatennachbarzellen umfassen, die zur Auswahl durch das mobile Endgerät (1) in dem ersten Frequenzband zur Verfügung stehen, und die dritten Systeminformationen eine dritte Liste von Informationen bezüglich der Frequenzen von Kandidatennachbarzellen in dem zweiten Frequenzband umfassen; und
Einstellen der ersten Liste durch Kombinieren der ersten Liste mit der zweiten Liste und von Informationen in der dritten Liste.

2. Verfahren gemäß Anspruch 1, wobei:
- das Kombinieren der ersten Liste mit der zweiten Liste und der dritten Liste ein Hinzufügen, zu der ersten Liste, lediglich jener Kandidatennachbarzellen umfasst, die in der zweiten und/oder dritten Liste angegeben sind, die nicht bereits in der ersten Liste angegeben sind; und/oder
- das Kombinieren der ersten Liste mit der zweiten und dritten Liste ein Hinzufügen, zu der ersten Liste, von Kandidatennachbarzellen umfasst, die in der zweiten und/oder dritten Liste angegeben sind, lediglich falls ein zweiter Netzwerkknoten des zumindest einen weiteren Netzwerkknotens in der ersten Liste angegeben ist.

3. Verfahren gemäß Anspruch 1 oder 2, wobei die Kandidatennachbarzellen in dem ersten Frequenzband und die Kandidatennachbarzellen in dem zweiten Frequenzband verschiedene Funkzugangstechnologien einsetzen, und der Einstellungsschritt Kandidatennachbarzellinformationen von Kandidatennachbarzellen unter Verwendung von verschiedenen Funkzugangstechnologien kombiniert.

4. Verfahren gemäß zumindest einem der Ansprüche 1 bis 3, wobei die Kandidatennachbarzellen (A, B), die zur Auswahl in dem ersten Frequenzband zur Verfügung stehen, und die Kandidatennachbarzellen (C-N), die zur Auswahl in dem zweiten Frequenzband zur Verfügung stehen, eine unterschiedliche Größe aufweisen.

5. Verfahren gemäß Anspruch 4, wobei, falls das mobile Endgerät (1) aus einer Makrozelle, die dem ersten Netzwerkknoten zugewiesen ist, in eine Makrozelle eintritt, die dem weiteren Netzwerkknoten zugewiesen ist, der Schritt des Empfangens der zweiten oder dritten Systeminformationen, die sich auf die kleinere Zelle beziehen, durch das mobile Endgerät (1) verzögert wird.

6. Verfahren gemäß zumindest einem der Ansprüche 1 bis 5, wobei die dritten Informationen eine Regel umfassen, die die Bestimmung einer Liste von Kandidatennachbarzellen ermöglicht, die zur Auswahl in dem zweiten Frequenzband zur Verfügung stehen, wenn das mobile Endgerät (1) in dem ersten Frequenzband operiert.

7. Verfahren gemäß Anspruch 6, wobei
die dritten Systeminformationen Informationen umfassen, dass dieselben Zellen, wie durch die Kandidatennachbarzellen in den zweiten Systeminformationen definiert, in einem unterschiedlichen Frequenzband zur Verfügung stehen, oder
die dritten Systeminformationen Informationen umfassen, welche der Kandidatennachbarzellen (C-N), die zur Auswahl in dem zweiten Frequenzband zur Verfügung stehen, dieselbe oder eine unterschiedliche Abdeckung bezüglich der Kandidatennachbarzellen aufweisen, die zur Auswahl in dem ersten Frequenzband zur Verfügung stehen.

8. Computerlesbares Medium (530), das Codeabschnitte umfasst, die bei Ausführung auf einem Prozessor (510) den Prozessor konfigurieren, um alle Schritte eines Verfahrens gemäß zumindest einem der vorangegangenen Verfahrensansprüche durchzuführen.

9. Mobiles Endgerät (1) für Kommunikationsdienste in einem Netzwerk, das eine Vielzahl von Netzwerkknoten (5) und eine oder mehrere Zellen umfasst, die in einem ersten Frequenzband (I) und einem zweiten Frequenzband (II) definiert ist oder sind, wobei jeder Netzwerkknoten (5) die eine oder mehreren Zellen (A, A', B, B', C, C', D, D', E, E', F, F') steuert, wobei jede Zelle einen gegebenen geographischen Bereich auf einem gegebenen Frequenzband abdeckt, das unter den ersten und zweiten Frequenzbändern ausgewählt ist, wobei das mobile Endgerät (1) umfasst:
eine Empfangseinheit (535), die eingerichtet ist, um:
- erste Systeminformationen aus einem ersten Netzwerkknoten in einer ersten Zelle zu empfangen, die momentan durch das mobile Endgerät (1) ausgewählt ist, wobei die ersten Systeminformationen eine erste Liste von Kandidatenzellen in einem ersten Frequenzband umfassen, die das mobile Endgerät (1) aus der momentan ausgewählten Zelle auswählen darf,
- zweite und dritte Systeminformationen aus zumindest einem weiteren Netzwerkknoten zu empfangen, dem sich das mobile Endgerät (1) nähert, wobei die zweiten Systeminformationen eine zweite Liste von Kandidatennachbarzellen umfassen, die zur Auswahl durch das mobile Endgerät (1) in dem ersten Frequenzband zur Verfügung stehen, und die dritten Systeminformationen eine dritte Liste von Informationen bezüglich der Frequenzbänder von Kandidatennachbarzellen in dem zweiten Frequenzband umfassen; und
eine Verarbeitungseinheit (510), die eingerichtet ist, um die erste Liste durch Kombinieren der ersten Liste mit der zweiten Liste und von Informationen in der dritten Liste einzustellen.

10. Mobiles Endgerät gemäß Anspruch 9, wobei die Verarbeitungseinheit (510) eingerichtet ist, um die erste Liste mit der zweiten Liste und der dritten Liste durch Hinzufügen, zu der ersten Liste, lediglich jener Kandidatennachbarzellen, die in den der zweiten und/oder dritten Liste angegeben sind, die nicht bereits in der ersten Liste angegeben sind, zu kombinieren.

11. Mobiles Endgerät gemäß Anspruch 9 oder 10, wobei die Verarbeitungseinheit (510) eingerichtet ist, um die erste Liste mit der zweiten und dritten Liste durch Hinzufügen, zu der ersten Liste, von Kandidatennachbarzellen, die in der zweiten und dritten Liste angegeben sind, falls lediglich ein zweiter Netzwerkknoten des zumindest einen weiteren Netzwerks in der ersten Liste angegeben wird, zu kombinieren.

12. Mobiles Endgerät gemäß zumindest einem der Ansprüche 9 bis 11, wobei die Kandidatennachbarzellen, die zur Auswahl in dem ersten Frequenzband zur Verfügung stehen, und die Kandidatennachbarzellen, die zur Auswahl in dem zweiten Frequenzband zur Verfügung stehen, verschiedene Funkzugangstechnologien einsetzen und die Verarbeitungseinheit eingerichtet ist, um Kandidatennachbarzellinformationen von Zellen zu kombinieren, die verschiedene Funkzugangstechnologien verwenden.

13. Mobiles Endgerät gemäß zumindest einem der Ansprüche 9 bis 12, wobei die Zellen (A, B), die zur Auswahl in dem ersten Frequenzband zur Verfügung stehen, und die Zellen (C-N), die zur Auswahl in dem zweiten Frequenzband zur Verfügung stehen, eine unterschiedliche Größe aufweisen.

14. Mobiles Endgerät gemäß Anspruch 13, wobei, falls das mobile Endgerät (1) aus einer Makrozelle, die dem ersten Netzwerkknoten zugewiesen ist, in eine Makrozelle eintritt, die einem weiteren Netzwerkknoten zugewiesen ist, das mobile Endgerät (1) eingerichtet ist, um das Empfangen der zweiten oder dritten Systeminformationen, die sich auf die kleinere Zelle beziehen, zu verzögern.

15. Mobiles Endgerät gemäß zumindest einem der Ansprüche 9 bis 14, wobei die dritten Informationen eine Regel umfassen, die die Bestimmung einer Liste von Kandidatennachbarzellen umfasst, die zur Auswahl in dem zweiten Frequenzband zur Verfügung stehen, wenn das mobile Endgerät (1) in dem ersten Frequenzband operiert.

16. Mobiles Endgerät gemäß Anspruch 15, wobei
die dritten Systeminformationen Informationen umfassen, dass dieselben Zellen, wie durch die Kandidatennachbarzellen in den zweiten Systeminformationen definiert, in einem unterschiedlichen Frequenzband zur Verfügung stehen, oder
die dritten Systeminformationen Informationen umfassen, welche der Kandidatennachbarzellen (C-N), die zur Auswahl in dem zweiten Frequenzband zur Verfügung stehen, dieselbe oder eine unterschiedliche Abdeckung hinsichtlich der Kandidatennachbarzellen aufweisen, die zur Auswahl in dem ersten Frequenzband zur Verfügung stehen.

## Revendications

1. Procédé de fourniture de services de communication à un terminal mobile (1) dans un réseau incluant une pluralité de noeuds (5) de réseau et une ou plusieurs cellules définies dans une première bande de fréquences et une deuxième bande de fréquences, chaque noeud (5) de réseau contrôlant la ou les plusieurs cellules (A, A', B, B', C, C', D, D', E, E', F, F'), dans lequel chaque cellule couvre une zone géographique donnée sur une bande de fréquences donnée choisie parmi les première et deuxième bandes de fréquences, le procédé comprenant :
la réception de premières informations système d'un premier noeud (5) de réseau dans une première cellule couramment sélectionnée par le terminal mobile (1), les premières informations système comprenant une première liste de cellules que le terminal mobile (1) est autorisé à sélectionner parmi la cellule couramment sélectionnée, dans lequel les cellules de la première liste sont disponibles à la sélection dans une première bande de fréquences ;
la réception de deuxièmes et troisièmes informations système d'au moins un autre noeud (5) de réseau dont le terminal mobile (1) s'approche, les deuxièmes informations système comprenant une deuxième liste de cellules voisines candidates disponibles à la sélection par le terminal mobile (1) dans la première bande de fréquences et les troisièmes informations système comprenant une troisième liste d'informations relatives aux fréquences de cellules voisines candidates dans la deuxième bande de fréquences ; et
l'ajustement de la première liste en combinant la première liste avec la deuxième liste et des informations dans la troisième liste.

2. Procédé selon la revendication 1, dans lequel :
- la combinaison de la première liste avec la deuxième liste et la troisième liste comprend l'ajout à la première liste d'uniquement les cellules voisines candidates indiquées dans la deuxième et/ou la troisième liste qui ne sont pas déjà indiquées dans la première liste ; et/ou
- la combinaison de la première liste avec la deuxième liste et la troisième liste comprend l'ajout à la première liste de cellules voisines candidates indiquées dans la deuxième et/ou la troisième liste uniquement si un deuxième noeud de réseau de l'au moins un autre noeud de réseau est indiqué dans la première liste.

3. Procédé selon la revendication 1 ou 2, dans lequel les cellules voisines candidates dans la première bande de fréquences et les cellules voisines candidates dans la deuxième bande de fréquences emploient des technologies d'accès radio différentes et l'étape d'ajustement combine des informations de cellule voisine candidate de cellules voisines candidates utilisant des technologies d'accès radio différentes.

4. Procédé selon l'une quelconque des revendications 1 à 3, dans lequel les cellules voisines candidates (A, B) disponibles à la sélection dans la première bande de fréquences et les cellules voisines candidates (C-N) disponibles à la sélection dans la deuxième bande de fréquences ont une taille différente.

5. Procédé selon la revendication 4, dans lequel, si le terminal mobile (1) entre d'une macrocellule affectée au premier noeud de réseau dans une macrocellule affectée à l'autre noeud de réseau, l'étape de réception des deuxièmes ou troisièmes informations système se rapportant à la cellule plus petite par le terminal mobile (1) est retardée.

6. Procédé selon l'une quelconque des revendications 1 à 5, dans lequel les troisièmes informations incluent une règle autorisant la détermination d'une liste de cellules voisines candidates disponibles à la sélection dans la deuxième bande de fréquences, lorsque le terminal mobile (1) fonctionne dans la première bande de fréquences.

7. Procédé selon la revendication 6, dans lequel
les troisièmes informations système incluent des informations que les mêmes cellules que celles définies par les cellules voisines candidates dans les deuxièmes informations système sont disponibles dans une bande de fréquences différente ou
les troisièmes informations système incluent des informations que les cellules voisines candidates (C-N) disponibles à la sélection dans la deuxième bande de fréquences ont la même couverture ou une couverture différente des cellules voisines candidates disponibles à la sélection dans la première bande de fréquences.

8. Support (530) lisible par ordinateur comprenant des parties de code qui, lorsqu'elles sont exécutées sur un processeur (510), configurent le processeur pour mettre en oeuvre toutes les étapes d'un procédé selon l'une quelconque des revendications de procédé précédentes.

9. Terminal mobile (1) pour des services de communication dans un réseau incluant une pluralité de noeuds (5) de réseau et une ou plusieurs cellules définies dans une première bande de fréquences (I) et une deuxième bande de fréquences (II), chaque noeud (5) de réseau contrôlant la ou les plusieurs cellules (A, A', B, B', C, C', D, D', E, E', F, F'), dans lequel chaque cellule couvre une zone géographique donnée sur une bande de fréquences donnée choisie parmi les première et deuxième bandes de fréquences, le terminal mobile (1) comprenant :
une unité (535) de réception adaptée à :
- recevoir des premières informations système d'un premier noeud de réseau dans une première cellule couramment sélectionnée par le terminal mobile (1), dans lequel les premières informations système comprennent une première liste de cellules candidates dans une première bande de fréquences que le terminal mobile (1) est autorisé à sélectionner parmi la cellule couramment sélectionnée, et
- recevoir des deuxièmes et troisièmes informations système d'au moins un autre noeud de réseau dont le terminal mobile (1) s'approche, dans lequel les deuxièmes informations système comprennent une deuxième liste de cellules voisines candidates disponibles à la sélection par le terminal mobile (1) dans la première bande de fréquences et les troisièmes informations système comprennent une troisième liste d'informations relatives aux fréquences de cellules voisines candidates dans la deuxième bande de fréquences ; et
une unité (510) de traitement adaptée à ajuster la première liste en combinant la première liste avec la deuxième liste et des informations dans la troisième liste.

10. Terminal mobile selon la revendication 9, dans lequel l'unité (510) de traitement est adaptée à combiner la première liste avec la deuxième liste et la troisième liste en ajoutant à la première liste uniquement les cellules voisines candidates indiquées dans la deuxième et/ou la troisième liste qui ne sont pas déjà indiquées dans la première liste.

11. Terminal mobile selon la revendication 9 ou 10, dans lequel l'unité (510) de traitement est adaptée à combiner la première liste avec la deuxième liste et la troisième liste en ajoutant à la première liste des cellules voisines candidates indiquées dans la deuxième et/ou la troisième liste uniquement si un deuxième noeud de réseau de l'au moins un autre noeud de réseau est indiqué dans la première liste.

12. Terminal mobile selon l'une quelconque des revendications 9 à 11, dans lequel les cellules voisines candidates disponibles à la sélection dans la première bande de fréquences et les cellules voisines candidates disponibles à la sélection dans la deuxième bande de fréquences emploient des technologies d'accès radio différentes et l'unité de traitement est adaptée à combiner des informations de cellule voisine candidate de cellules utilisant des technologies d'accès radio différentes.

13. Terminal mobile selon l'une quelconque des revendications 9 à 12, dans lequel les cellules (A, B) disponibles à la sélection dans la première bande de fréquences et les cellules (C-N) disponibles à la sélection dans la deuxième bande de fréquences ont une taille différente.

14. Terminal mobile selon la revendication 13, dans lequel, si le terminal mobile (1) entre d'une macrocellule affectée au premier noeud de réseau dans une macrocellule affectée à un autre noeud de réseau, le terminal mobile (1) est adapté à retarder la réception des deuxièmes ou troisièmes informations système se rapportant à la cellule plus petite.

15. Terminal mobile selon l'une quelconque des revendications 9 à 14, dans lequel les troisièmes informations incluent une règle autorisant la détermination d'une liste de cellules voisines candidates disponibles à la sélection dans la deuxième bande de fréquences, lorsque le terminal mobile (1) fonctionne dans la première bande de fréquences.

16. Terminal mobile selon la revendication 15, dans lequel
les troisièmes informations système incluent des informations que les mêmes cellules que celles définies par les cellules voisines candidates dans les deuxièmes informations système sont disponibles dans une bande de fréquences différente ou
les troisièmes informations système incluent des informations que les cellules voisines candidates (C-N) disponibles à la sélection dans la deuxième bande de fréquences ont la même couverture ou une couverture différente des cellules voisines candidates disponibles à la sélection dans la première bande de fréquences.
